(19)

Europäisches Patentamt
European Patent Office
Office européen des brevets

(11) **EP 3 561 478 A2**

(12) **EUROPEAN PATENT APPLICATION**
published in accordance with Art. 153(4) EPC

(43) Date of publication:
**30.10.2019 Bulletin 2019/44**

(21) Application number: **17882316.7**

(22) Date of filing: **15.12.2017**

(51) Int Cl.:
*G01N 15/02* (2006.01)   *G01N 21/17* (2006.01)
*G01N 21/35* (2014.01)

(86) International application number:
**PCT/KR2017/014793**

(87) International publication number:
**WO 2018/117537 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **22.12.2016   KR 20160176616**
**13.12.2017   KR 20170171495**

(71) Applicant: **Posco**
**Pohang-si, Gyeongsangbuk-do 37859 (KR)**

(72) Inventors:
• **CHOI, Sang-Woo**
**Pohang-si**
**Gyeongsangbuk-do 37877 (KR)**
• **BAE, Ho-Moon**
**Pohang-si**
**Gyeongsangbuk-do 37877 (KR)**

• **HWANG, Won-Ho**
**Pohang-si**
**Gyeongsangbuk-do 37877 (KR)**
• **KIM, Kwan-Tae**
**Pohang-si**
**Gyeongsangbuk-do 37877 (KR)**
• **PARK, Young-Do**
**Pohang-si**
**Gyeongsangbuk-do 37877 (KR)**
• **KIM, Young-Hyun**
**Pohang-si**
**Gyeongsangbuk-do 37877 (KR)**
• **CHOI, Tae-Hwa**
**Pohang-si**
**Gyeongsangbuk-do 37877 (KR)**
• **PARK, Ji-Sung**
**Pohang-si**
**Gyeongsangbuk-do 37877 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **APPARATUS FOR MEASURING PARTICLE SIZE AND DRYNESS/WETNESS OF RAW MATERIAL BEING TRANSFERRED, AND APPARATUS FOR MEASURING PARTICLE SIZE OF MIXED RAW MATERIAL**

(57)     An apparatus for measuring the particle size and dryness/wetness of a raw material according to one embodiment of the present invention may comprise: a visible-light illumination unit for irradiating visible light to a raw material being transferred; an infrared illumination unit for irradiating infrared light to the raw material; a camera for acquiring an image of the raw material irradiated with visible light and infrared light, in a direction different from the irradiation direction of the visible-light illumination unit; and an image processing unit for generating particle size information and dryness/wetness information of the raw material by analyzing the acquired image.

【FIG. 1】

## Description

[Technical Field]

The present disclosure relates to an apparatus for measuring a particle size and dryness/wetness of a raw material being transferred and an apparatus for measuring a particle size of a mixed raw material.

[Background Art]

Generally, operational conditions of a process may be affected by a particle size and dryness/wetness of a raw material supplied in a process.

For example, it may be necessary to increase the temperature of a top of a blast furnace when a particle size of a charged raw material, such as coke, a sintered ore, a sized ore, a pellet, or the like, is large, or when the raw material is wet.

When operational conditions related to a particle size and dryness/wetness of a raw material are not determined, a condition of a top of a blast furnace may degrade or energy may be wasted unnecessarily.

[Disclosure]

[Technical Problem]

An aspect of the present disclosure is to provide an apparatus for measuring a particle size and dryness/wetness and an apparatus for measuring a particle size of a mixed raw material.

[Technical Solution]

An apparatus for measuring the particle size and dryness/wetness of a raw material according to one embodiment of the present invention may comprise: a visible-light illumination unit for illuminating visible light to a raw material being transferred; an infrared illumination unit for illuminating infrared light to the raw material; a camera for acquiring an image of the raw material illuminated with visible light and infrared light, in a direction different from the illumination direction of the visible-light illumination unit; and an image processing unit for generating particle size information and dryness/wetness information of the raw material by analyzing the acquired image.

An apparatus for measuring a particle size of a mixed raw material according to one embodiment of the present invention may comprise: a visible-light illumination unit illuminating visible light to a first raw material of a first type and a second raw material of a second type, which are mixed in every unit area on a belt conveyor; a camera acquiring an image of an unit area illuminated with visible light in a direction different from an illumination direction of the visible-light illumination unit; and an image processing unit generating particle size information of the first and second raw materials in each of the unit areas by generating first particle size information of a first pixel group having a particle size of within a first reference range among a plurality of pixel groups having brightness lower than reference brightness, and second particle size information of a second pixel group having a particle size of within a second reference range among the plurality of pixel groups, from the image.

[Advantageous Effects]

According to an example embodiment in the present disclosure, a particle size and dryness/wetness of a raw material being transferred may swiftly and easily be measured. Accordingly, a particle size and dryness/wetness of a raw material may be reflected swiftly and accurately in operational conditions of a process to which a transferred raw material goes through.

According to an example embodiment in the present disclosure, a particle size of each of raw materials of a mixed raw material may be swiftly and easily measured. Accordingly, particle size information of the mixed raw material may be reflected swiftly and accurately in operational conditions of a process which the mixed raw material goes through.

[Description of Drawings]

FIG. 1 is a diagram illustrating an apparatus for measuring a particle size and dryness/wetness according to an example embodiment of the present disclosure;

FIG. 2 is a diagram illustrating an integrated module in which a visible-light illumination unit, a second visible-light illumination unit, an infrared illumination unit, and a camera are integrated;

FIG. 3 illustrates an image obtained by a camera;

FIG. 4 is a diagram illustrating an apparatus for measuring a particle size and dryness/wetness and an apparatus for measuring a particle size according to an example embodiment of the present disclosure;

FIG. 5 is a diagram illustrating a position and a width of a visible-light illumination unit; and

FIG. 6 is a diagram illustrating an image of a unit area in which an example of a first raw material (a sintered ore) and/or an example of a second raw material (a sized ore, a pellet) are disposed.

[Best Mode for Invention]

Hereinafter, example embodiments of the present disclosure will be described with reference to the accompanying drawings. The present invention may be modified in various manners, and the scope of the present disclosure is not limited to the example embodiments described in the below descriptions. In the drawings, shapes, sizes, and the like, of elements may be exaggerated for clarity of description, and the same elements will be denoted by the same reference numerals.

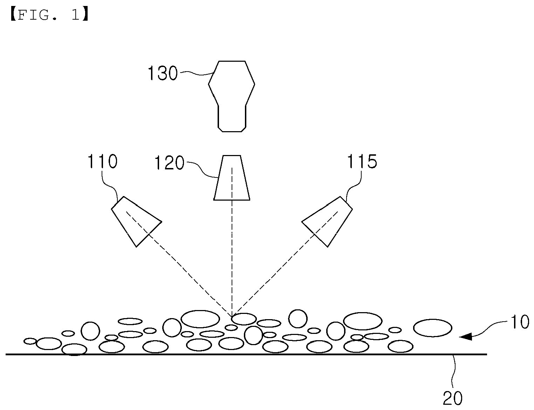

FIG. 1 is a diagram illustrating an apparatus for measuring a particle size and dryness/wetness according to an example embodiment.

Referring to FIG. 1, an apparatus for measuring a particle size and dryness/wetness may include a visible-light illumination unit 110, a second visible-light illumination unit 115, an infrared illumination unit 120, a camera 130, and an image processing unit 140.

For example, a raw material 10 may be at least one of cokes, a sintered ore, a sized ore, and a pellet, and may be transferred by a belt conveyor 20. The diagram in FIG. 1 is illustrated with reference to a transferring direction of the raw material 10.

The visible-light illumination unit 110 may illuminate visible light to the raw material 10.

The second visible-light illumination unit 115 may illuminate visible light to the raw material 10 in a direction different from an illumination direction of the visible-light illumination unit 110.

For example, the visible-light illumination unit 110 and the second visible-light illumination unit 115 may be implemented as a bar-type illumination system which uniformly illuminates visible light to an overall width of the belt conveyor 20.

The infrared illumination unit 120 may illuminate infrared light to the raw material 10. Illuminated infrared light may be absorbed to moisture contained in the raw material 10. Thus, infrared reflective energy of a wet raw material may be less than infrared reflective energy of a dry raw material.

If the raw material 10 is a sintered ore or cokes, the raw material 10 may strongly absorb infrared light having a wavelength of 1200 nm. Thus, the infrared illumination unit 120 may illuminate infrared light having a wavelength of close to 1200 nm. However, an example embodiment thereof is not limited thereto. For example, the infrared illumination unit 120 may be implemented as an LED illuminating infrared light having a wavelength of approximately 940 nm, or may be implemented as an Nd-YAG laser illuminating infrared light having a wavelength of approximately 1064 nm. An optimal wavelength of infrared light may vary depending on a type or a size of the raw material 10.

The camera 130 may obtain an image of the raw material 10 illuminated with visible light and infrared light. For example, the camera 130 may consecutively image the raw material 10 by a line-scan method to obtain a high quality image of the raw material 10 being transferred, or may image a stopping state of the raw material 10 by a strobo method.

An image acquisition direction of the camera 130 may be different from an illumination direction of the visible-light illumination unit 110 and an illumination direction of the second visible-light illumination unit 115. Accordingly, a shadow of the raw material 10 may appear on the image obtained by the camera 130. A boundary of the raw material 10 may become distinct by the shadow.

For example, the camera 130 may be disposed between the visible-light illumination unit 110 and the second visible-light illumination unit 115. Thus, the visible-light illumination unit 110 and the second visible-light illumination unit 115 may be disposed in one region and the other region in an image acquisition direction of the camera 130, respectively. Accordingly, a shadow of one surface of the raw material 10 formed by the visible-light illumination unit 110 and a shadow of the other surface of the raw material 10 formed by the second visible-light illumination unit 115 may appear on the image obtained by the camera 130. Thus, a shape of the raw material 10 may appear clearly on the image obtained by the camera 130.

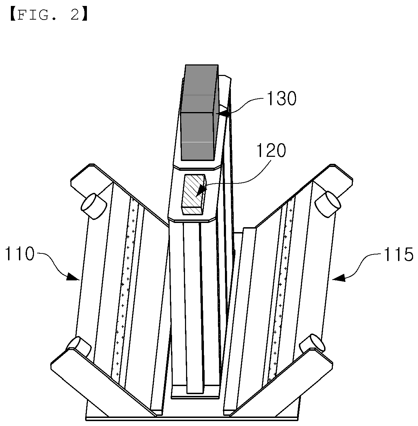

The visible-light illumination unit 110, the second visible-light illumination unit 115, the infrared illumination unit 120, and the camera 130 may be implemented as an integrated module as illustrated in FIG. 2. The integrated module may prevent an arrangement relationship of the visible-light illumination unit 110, the second visible-light illumination unit 115, the infrared illumination unit 120, and the camera 130 from being affected from an external physical impact, and may prevent degradation of light-emitting quality and light-receiving quality.

A distance from the camera 130 to the raw material 10 may be greater than a distance from the visible-light illumination unit 110 to the raw material 10 and a distance from the second visible-light illumination unit 115 to the raw material 10. Accordingly, light-emitting energy required for forming a shadow on the raw material 10 may decrease, and noise caused by scattered light or an external environment while obtaining an image may decrease.

Depending on a design, the integrated module may further include a gas radiating unit (not illustrated) radiates a clean gas to remove dust between the camera 130 and the belt conveyor 20. The gas radiating unit may radiate a clean gas from one side to the other side on a lower end of the camera 130, and the integrated module may have a sealing case for preventing the dust removed by the clean gas from entering the camera 130. Thus, the case may be disposed to surround a lens of the camera 130 such that the case may surround the camera 130, the visible-light illumination unit 110, the second visible-light illumination unit 115, and the infrared illumination unit 120.

The image processing unit 140 may analyze an image obtained by the camera 130 and may generate particle size information and dryness/wetness information of the raw material 10. The image processing unit 140 may analyze a size of a shape formed by a shadow in the image and may generate particle size information of the raw material 10.

The image processing unit 140 may also analyze brightness of a shape formed by a shadow in the image and may generate dryness/wetness information of the raw material 10. Infrared light reflected from the raw material 10 may be imaged by the camera 130 unlike the naked eye.

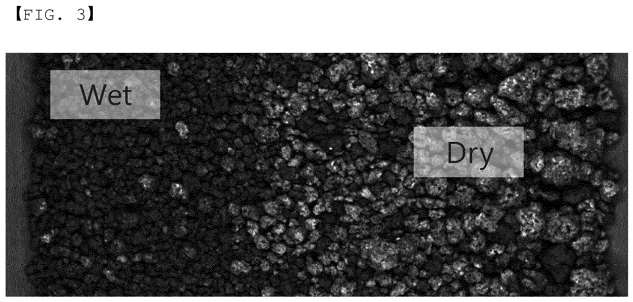

Thus, as illustrated in FIG. 3, infrared light reflected from the raw material 10 may be reflected in the image analyzed in the image processing unit 140. As infrared reflective energy of a wet raw material is less than infrared reflective energy of a dry raw material, the image processing unit 140 may determine that the darker the shape formed by a shadow in the image, the wetter the raw material 10 may be.

For example, the image processing unit 140 may determine a group of pixels of the image having brightness lower than reference brightness as a boundary of the raw material, may generate the particle size information corresponding to a size of a shape formed by the boundary, and may generate the dryness/wetness information corresponding to brightness of a shape formed by the boundary.

Generally, the raw material 10 may be transferred immediately before the raw material is supplied to a process, and a particle size and dryness/wetness of the raw material may change due to a factor such as an environment, and the like, while being transferred. The apparatus for measuring a particle size and dryness/wetness in the example embodiment may swiftly measure a particle size and dryness/wetness of the raw material 10 immediately before the raw material 10 is provided to an operation, and may reflect the result of the measurement to operational conditions in real time. Accordingly, accurate particle size information and dryness/wetness information of the raw material 10 may be reflected in operational conditions.

For example, the process of supplying the raw material 10 may operate in relatively high temperature when the raw material 10 is relatively wet or a particle size of the raw material 10 is large, and when the raw material 10 is relatively dry or a particle size of the raw material 10 is small, the process may operate in relatively low temperature.

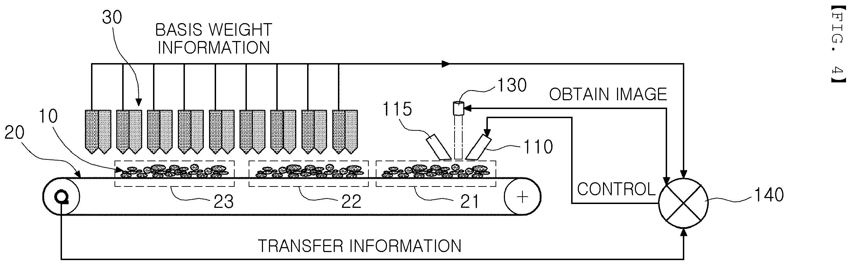

Referring to FIG. 4, the belt conveyor 20 may include first, second, and third unit areas 21, 22, and 23.

While the belt conveyor 20 operates, a part of the raw material 10 may be disposed in the first unit area 21 at a first time point, the other part of the raw material 10 may be disposed in the second unit area 22 at a second time point, and the remaining part of the raw material 10 may be disposed in the third unit area 23 at a third time point. The raw material 10 may be supplied onto the belt conveyor 20 while being contained in a bin, and the first, second, and third time points may correspond to time points when a gate of the bin is opened or closed.

The first, second, and third unit areas 21, 22, and 23 may pass through an imaging area of the camera 130 at different time points, and the image processing unit 140 may allow an image imaged at an earlier time point of the imaging time point of the camera 130 to correspond to the first unit area 21, and may allow an image imaged at a later time point of the imaging time point of the camera 130 to correspond to the third unit area 23.

For example, the image processing unit 140 may receive time point information and distance information of a part of the raw material 10 disposed on the belt conveyor 20, and moving speed information of the belt conveyor 20 (e.g., an output value of an encoder installed on a wheel of the belt conveyor), and may calculate first imaging time point information related to the first unit area 21 of the camera 130 on the basis of the time point information, the distance information, and the moving speed information. The image processing unit 140 may accurately control an imaging operation of the camera 130 on the basis of the first imaging time point information.

A first raw material of a first type (e.g., a sintered ore, cokes) and a second raw material of a second type (e.g., a sized ore, a pellet, a briquette, and the like) may be disposed together in at least portions of the first, second, and third unit areas 21, 22, and 23. For example, the first and second raw materials may be simultaneously supplied to a single unit area while being disposed in different weighing hoppers, or may be supplied to a single unit area while being disposed together in a single weighing hopper because of a blocking sieve used in the process of sorting the first and second raw materials.

When a general particle size of the first raw material is greatly different from a general particle size of the second raw material, the image processing unit 140 may identify the first raw material and the second raw material from the image, and may generate first particle size information of the first raw material and second particle size information of the second raw material. Accordingly, the image processing unit 140 may efficiently generate particle size information of the first and second raw materials mixed in a unit area.

For example, the image processing unit 140 may extract a plurality of pixel groups (or boundaries) having brightness lower than reference brightness and having a certain form (e.g., circle, semicircle, oval, polygon, wedge, and the like) from the image obtained by the camera 130 at the first imaging time point. Thereafter, the image processing unit 140 may generate information of an approximate particle size of each of the plurality of pixel groups, and may determine whether each approximate particle size is within a first reference range (e.g., between 10mm and 15mm), which is based on a general particle size (e.g., 12.5 mm) of the first raw material, and is within a second reference range which is based on a general particle size of the second raw material. Thereafter, the image processing unit 140 may generate particle size information of each of the first and second raw materials by generating first particle size information of a first pixel group having a particle size of within the first reference range among the plurality of pixel groups, and second particle size information of a second pixel group having a particle size of within the second reference range among the plurality of pixel groups.

Depending on a design, the image processing unit 140 may generate dryness/wetness information of each of the first and second raw materials by generating first dryness/wetness information corresponding to brightness of a shape formed by the first pixel group, and second dryness/wetness information corresponding to brightness of a shape formed by the second pixel group. Accordingly, the image processing unit 140 may effectively generate dryness/wetness information of the first and second raw materials mixed in a unit area.

Referring to FIG. 4, a basis weight information acquisition unit 30 may obtain basis weight information of the first and second raw materials in each of the first, second, and third unit areas 21, 22, and 23.

For example, the basis weight information acquisition unit 30 may measure a weight of a first bin containing the first raw material, and a weight of a second bin containing the second raw material, and may generate basis weight information on the basis of the result of the measurement, or may receive size information of the first raw material and size information of the second raw material and may extract basis weight information from the size information.

The image processing unit 140 may receive basis weight information from the basis weight information acquisition unit 30 and may generate comprehensive particle size information encompassing the first and second particle size information on the basis of the basis weight information.

Depending on the basis weight information, the comprehensive particle size information may have relatively higher correlation in relation to an optimal operational condition of a process which the raw material 10 goes through. Thus, an operational condition of the process which the raw material 10 goes through may be optimized using the comprehensive particle size information.

For example, the comprehensive particle size information may include at least two of a basis weight average particle size, a basis weight particle size distribution, and a basis weight particle size skewness.

The basis weight average particle size may be represented by equation 1 as below. In the equation, "i" indicates an order of raw materials, "w" indicates a basis weight of a raw material, and "x" indicates a particle size of a raw material.

[Equation 1]

$$\tilde{x} = \frac{\sum w_i x_i}{\sum w_i}$$

The basis weight particle size distribution may be represented by equation 2 as below. In the equation, "s" indicates a standard deviation, and "v" indicates a distribution.

[Equation 2]

$$\tilde{s}_p^2 = \tilde{v}_p = \frac{\sum w_i (x_i - \tilde{x})^2}{\sum w_i}$$

The basis weight particle size skewness may be represented by equation 3 as below.

[Equation 3]

$$\tilde{\gamma}_{1,p} = \frac{\sum w_i \left(\frac{x_i - \tilde{x}}{\tilde{s}_p}\right)^3}{\sum w_i}$$

The image processing unit 140 may replace a particle size of each of the equation 1, the equation 2, and the equation 3 with a dryness/wetness parameter (e.g., dryness and wetness), and may apply the first and second basis weight information to the first and second dryness/wetness information, respectively, thereby generating comprehensive dryness/wetness information of the first and second raw materials. Depending on the basis weight information, the comprehensive dryness/wetness information may have relatively higher correlation in relation to an optimal operational condition of a process which the raw material 10 goes through. Thus, an operational condition of the process which the raw material 10 goes through may be optimized using the comprehensive dryness/wetness information.

One of the visible-light illumination unit 110 and the second visible-light illumination unit 115 may illuminate visible light in a diagonal line formed in a transferring direction of the raw material 10 from an upper end, and the other may illuminate visible light in a diagonal line formed in a direction opposite to the transferring direction of the raw material 10 from an upper end.

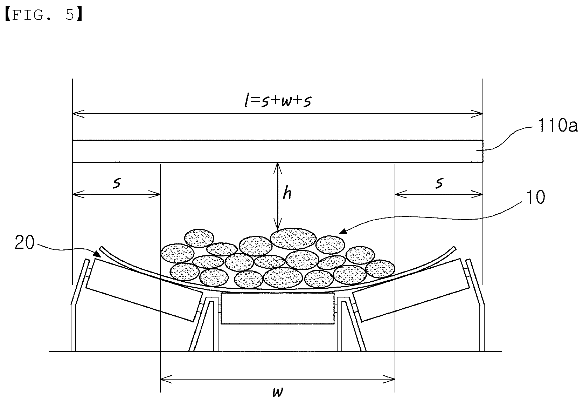

Referring to FIG. 5, a visible-light illumination unit 110a and a second visible-light illumination unit may have a width (1=s+w+s) longer than a width w of a transferring path of the raw material 10. Accordingly, the visible-light illumination unit 110a and the second visible-light illumination unit may uniformly illuminate visible light from a center of the raw material 10 to edges, and thus, an image processing unit may uniformly extract particle size information and dryness/wetness information related to an overall obtained image in a uniform manner.

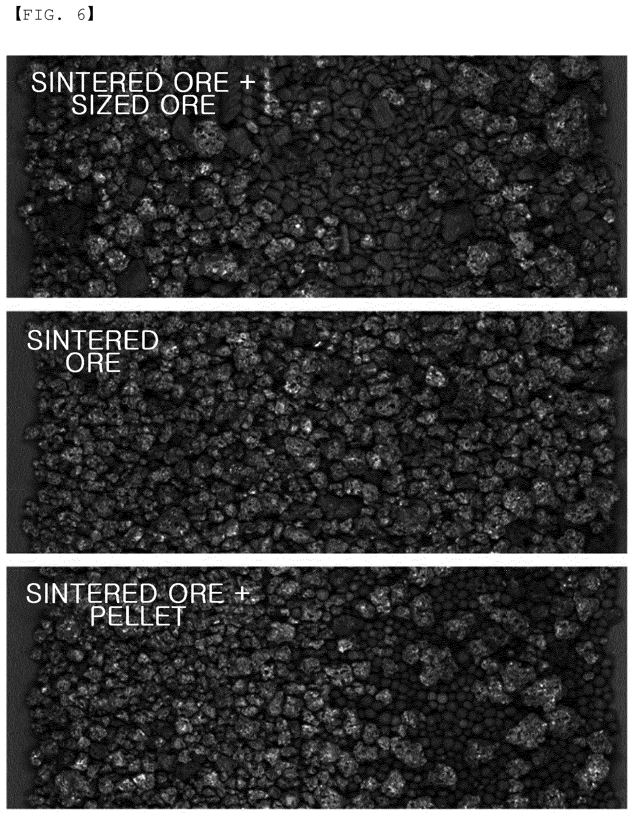

Referring to FIG. 6, an example of a first raw material (sintered ore) and an example of a second raw material (sized ore) may be disposed in a first unit area, only an example of the first raw material (sintered ore) may be disposed in a second unit area, and an example of the first raw material (sintered ore) and an example of the second raw material (pellet) may be disposed in a third unit area. The pellet may be replaced with a briquette formed by crushing powder in bulk form.

A general particle size of a sintered ore may be greater than a general particle size of a sized ore, and a general particle size of a sized ore may be greater than a general particle size of a pellet. Thus, the image processing unit may determine that a particle size of a raw material disposed in the second unit area is the greatest, and that a particle size of a raw material disposed in the third unit area is the smallest.

The present disclosure is not limited to the example embodiments and the accompanied drawings. The scope of the present disclosure is defined only by appended claims, and it will be apparent to those skilled in the art that substitution, modifications, and variations could be made without departing from the scope of the present invention as defined by the appended claims.

## Claims

1. An apparatus for measuring a particle size and dryness/wetness, comprising:

   a visible-light illumination unit illuminating visible light to a raw material being transferred;
   an infrared illumination unit illuminating infrared light to the raw material;
   a camera acquiring an image of the raw material illuminated with visible light and infrared light in a direction different from an illumination direction of the visible-light illumination unit; and
   an image processing unit generating particle size information and dryness/wetness information of the raw material by analyzing the image.

2. The apparatus for measuring a particle size and dryness/wetness of claim 1, further comprising:

   a second visible-light illumination unit illuminating visible light to the raw material in a direction different from an illumination direction of the visible-light illumination unit,
   wherein an illumination direction of the second visible-light illumination unit is different of an image acquisition direction of the camera.

3. The apparatus for measuring a particle size and dryness/wetness of claim 2, wherein the visible-light illumination unit and the second visible-light illumination unit are disposed in one region and the other region, respectively, in an image acquisition direction of the camera.

4. The apparatus for measuring a particle size and dryness/wetness of claim 2,

wherein one of the visible-light illumination unit and the second visible-light illumination unit illuminates visible light in a diagonal line formed in a transferring direction of the raw material from an upper end, and the other illuminates visible light in a diagonal line formed in a direction opposite to the transferring direction of the raw material from an upper end, and wherein the visible-light illumination unit and the second visible-light illumination unit each have a width greater than a width of a transferring path of the raw material.

5. The apparatus for measuring a particle size and dryness/wetness of claim 2, further comprising:
   an integrated module in which the visible-light illumination unit, the second visible-light illumination unit, the infrared illumination unit, and the camera are integrated.

6. The apparatus for measuring a particle size and dryness/wetness of claim 1, wherein a distance from the camera to the raw material is greater than a distance from the visible-light illumination unit to the raw material.

7. The apparatus for measuring a particle size and dryness/wetness of claim 1, wherein the image processing unit determines a group of pixels of the image having brightness lower than reference brightness as a boundary of the raw material, generates the particle size information corresponding to a size of a shape formed by the boundary, and generates the dryness/wetness information corresponding to brightness of the shape formed by the boundary.

8. The apparatus for measuring a particle size and dryness/wetness of claim 1,
   wherein the raw material includes a first raw material of a first type, and a second raw material of a second type,
   wherein the image processing unit generates particle size information of the first and second raw materials by generating first particle size information of a first pixel group having a particle size of within a first reference range among a plurality of pixel groups having brightness lower than reference brightness, and second particle size information of a second pixel group having a particle size of within a second reference range among the plurality of pixel groups, from the image.

9. The apparatus for measuring a particle size and dryness/wetness of claim 8, wherein the image processing unit generates dryness/wetness information of the first and second raw materials by generating first dryness/wetness information corresponding to brightness of a shape formed by the first pixel group, and second dryness/wetness information corresponding to brightness of a shape formed by the second pixel group.

10. The apparatus for measuring a particle size and dryness/wetness of claim 8, wherein the image processing unit receives first basis weight information of the first raw material and second basis weight information of the second raw material, and applies the first basis weight information and the second basis weight information to the first particle size information and the second particle size information, respectively, thereby generating comprehensive particle size information of the first and second raw materials.

11. The apparatus for measuring a particle size and dryness/wetness of claim 10,
wherein the first and second raw materials are mixed in every unit area on a belt conveyor and transferred, and
wherein the image processing unit receives basis weight information of the first and second raw materials of each of the unit areas, and applies the basis weight information of the first and second raw materials to the first and second particle size information, thereby generating comprehensive particle size information of the first and second raw materials of each of the unit areas.

12. The apparatus for measuring a particle size and dryness/wetness of claim 10, wherein the representative particle size information includes at least two of a basis weight average particle size, a basis weight particle size distribution, and a basis weight particle size skewness.

13. The apparatus for measuring a particle size and dryness/wetness of claim 10, wherein the image processing unit generates dryness/wetness information of the first and second raw materials by generating first dryness/wetness information corresponding to brightness of a shape formed by the first pixel group, and second dryness/wetness information corresponding to brightness of a shape formed by the second pixel group, and generates comprehensive dryness/wetness information of the first and second raw materials by applying the first basis weight information and the second basis weight information to the first dryness/wetness information and the second dryness/wetness information, respectively.

14. An apparatus for measuring a particle size of a mixed raw material, comprising:

a visible-light illumination unit illuminating visible light to a first raw material of a first type and a second raw material of a second type, which are mixed in every unit area on a belt conveyor;

a camera acquiring an image of an unit area illuminated with visible light in a direction different from an illumination direction of the visible-light illumination unit; and
an image processing unit generating particle size information of the first and second raw materials in each of the unit areas by generating first particle size information of a first pixel group having a particle size of within a first reference range among a plurality of pixel groups having brightness lower than reference brightness, and second particle size information of a second pixel group having a particle size of within a second reference range among the plurality of pixel groups, from the image.

15. The apparatus for measuring a particle size of a mixed raw material of claim 14, wherein the image processing unit receives basis weight information of the first and second raw materials of each of the unit areas, and applies the basis weight information of the first and second raw materials to the first and second particle size information, thereby generating comprehensive particle size information of the first and second raw materials of each of the unit areas.

【FIG. 1】

【FIG. 2】

【FIG. 3】

[FIG. 4]

EP 3 561 478 A2

【FIG. 5】

【FIG. 6】